**Europäisches Patentamt**

**European Patent Office**

**Office européen des brevets**

(19)

(11) Veröffentlichungsnummer: **0 279 879**
**B1**

(12)

# EUROPÄISCHE PATENTSCHRIFT

(45) Veröffentlichungstag der Patentschrift:
**10.10.90**

(51) Int. Cl.⁵: **F16H 29/00**

(21) Anmeldenummer: **87102594.6**

(22) Anmeldetag: **24.02.87**

(54) **Impulsreibungsgetriebe.**

(43) Veröffentlichungstag der Anmeldung:
**31.08.88 Patentblatt 88/35**

(45) Bekanntmachung des Hinweises auf die Patenterteilung:
**10.10.90 Patentblatt 90/41**

(84) Benannte Vertragsstaaten:
**BE DE FR GB IT SE**

(56) Entgegenhaltungen:
**BE-A- 435 036**
**CH-A- 403 428**
**GB-A- 1 144 963**
**US-A- 3 004 440**

(73) Patentinhaber: **NPSK PO KONTROLNO SAVARATSCHNI RABOTI, 165-Str. 3, BG-1156 Sofia(BG)**

(72) Erfinder: **Bakalov, Ivan Atanassov, Dipl.-Ing., Boul. Tolbuhin 19, Sofia(BG)**
Erfinder: **Popova, Sofka Georgieva, Dipl.-Ing., Boul. Tolbuhin 19, Sofia(BG)**

(74) Vertreter: **Finck, Dieter et al, Patentanwälte v. Füner, Ebbinghaus, Finck Mariahilfplatz 2 & 3, D-8000 München 90(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Impulsreibungsgetriebe mit einer Führungskurbelwelle und einer von einem ersten und einem zweiten flexiblen Element anliegend umfaßten Ausgangswelle, wobei die Führungskurbelwelle einen ersten und einen zweiten zur Führungskurbelwelle jeweils parallelen Kurbelzapfen aufweist, mit denen ein Ende des ersten flexiblen Elements bzw. des zwiten flexiblen Elements verbunden ist, während das andere Ende der beiden flexiblen Elemente mit einer Spanneinrichtung verbunden ist.

Bei einem solchen, aus der BE-A 435 036 bekannten Impulsgetriebe sind beide Enden der flexiblen Elemente an einer Stange angelenkt, die über eine Koppel mit dem Kurbelzapfen der Kurbelwelle verbunden ist. An dem Gelenkpunkt, an dem das andere Ende des flexiblen Element angelenkt ist, ist zudem eine weitere Stange mit einem Ende angelenkt, die an ihrem anderen Ende mit einem um einen Drehpunkt schwenkbaren Hebel verbunden ist, der ein verstellbares Gegengewicht trägt. Die Anordnung eines solchen Koppelantriebs ist konstruktiv sehr aufwendig und hat einen hohen Platzbedarf.

Der Erfindung liegt die Aufgabe zugrunde, ein konstruktiv einfaches Impulsreibungsgetriebe zu schaffen, das bei geringem Platzbedarf eine konstante Impulsübertragung auf die Ausgangswelle ermöglicht.

Diese Aufgabe wird ausgehend von dem gattungsgemäßen Stand der Technik dadurch gelöst, daß die Kurbelzapfen um 180É zueinander versetzt sind, daß im Bereich zwischen den Endpunkten des Anliegens der beiden flexiblen Elemente an der Ausgangswelle und den Verbindungsstellen der flexiblen Elemente mit der Führungskurbelwelle ein weiteres Spannmittel mit den beiden flexiblen Elementen verbunden ist, und daß sich beide Spannmittel jeweils an einem ortsfesten Widerlager abstützen.

Vorteilhafterweise sind beide Spannmittel Federn, wobei die Kraft der Federn des zweiten Spannmittels veränderbar ist.

Bei einer weiteren vorteilhaften Ausführungsform des Impulsreibungsgetriebes ist das eine Spannmittel ein lagefestes Element, das mit seinen beiden Enden jeweils mit den einen Ende der beiden flexiblen Elemente gelenkig verbunden ist, wobei an der Mitte des lagefesten Elements eine Spannfeder über einen Halter angelenkt ist. Zudem weist das weitere Spannmittel ein weiteres lagefestes Element auf, das mit seinen beiden Enden an den flexiblen Elementen angelenkt ist und das in seiner Mitte mit einer ortsfesten regulierenden Spannvorrichtung in Verbindung steht.

Das erfindungsgemäße Impulsreibungsgetriebe ist konstruktiv einfach und ermöglicht bei geringem Platzbedarf eine konstante Impulsübertragung der flexiblen Elemente auf die Ausgangswelle. Die Drehzahl des Impulsreibungsgetriebes läßt sich in einem breiten Bereich regeln, wobei die Verschiebung zwischen den flexiblen Elementen und der Ausgangswelle gering ist. Das Impulsreibungsgetriebe hat außerdem eine hohe Lebensdauer.

Anhand der Zeichnungen werden Ausführungsbeispiele der Erfindung näher erläutert. Es zeigt:

Fig. 1 perspektivisch eine erste Ausführungsform eines Impulsreibungsgetriebes und

Fig. 2 perspektivisch eine zweite Ausführungsform des Impulsreibungsgetriebes.

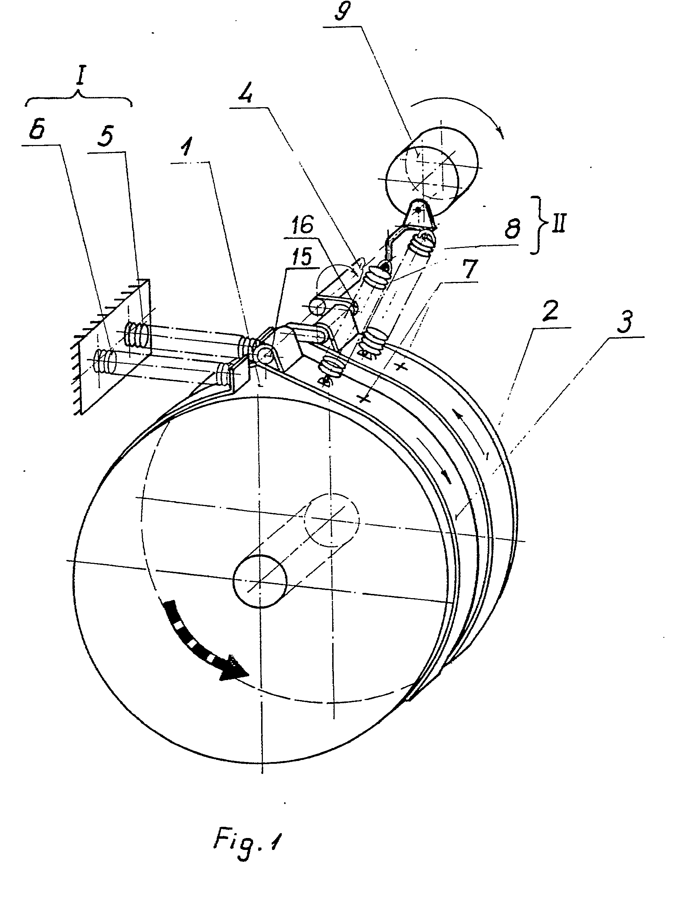

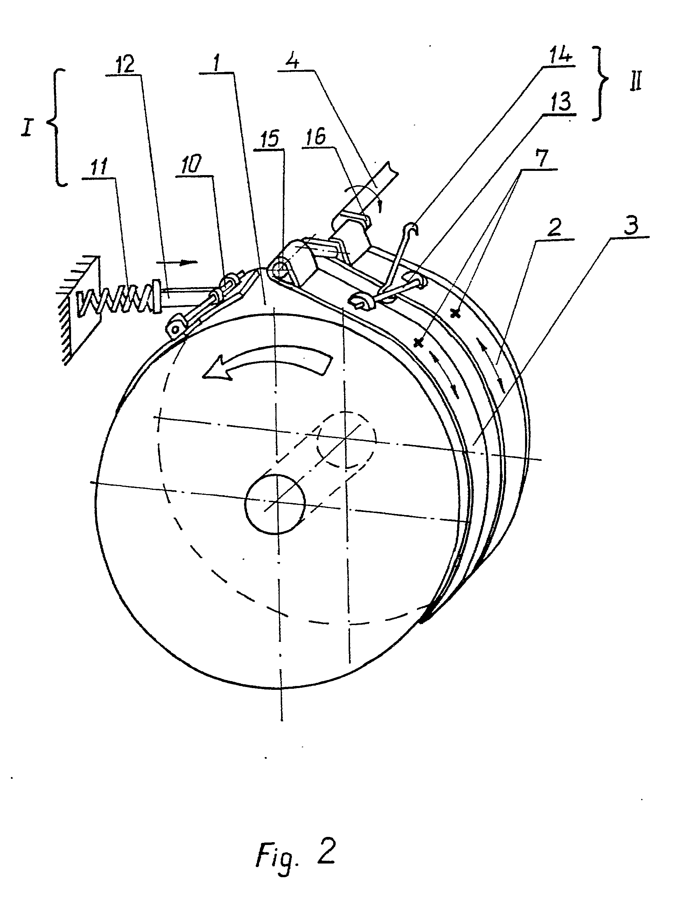

Das in Fig. 1 und 2 gezeigte Impulsreibungsgetriebe hat eine Ausgangswelle 1, um die herum sich ein erstes und ein zweites flexibles Element 2 bzw. 3 erstrecken, welche mit ihrem einen Ende an einem ersten Kurbelzapfen 15 bzw. einen zweiten Kurbelzapfen 16 einer Führungskurbelwelle 4 und mit ihrem anderen Ende jeweils an einem Spannmittel I befestigt sind, das sich an einem ortsfesten Widerlager abstützt. In der Figur 1 fällt dabei die Achse des ersten Kurbelzapfens mit der Achse eines Führungswellenabschnitts der Führungswelle 4 zusammen. Die Achse des zweiten Kurbelzapfens 16 ist parallel zu dieser gemeinsamen Achse und davon um den Abstand einer ihn haltenden Kurbelwange entfernt. Die beiden Kurbelzapfenabschnitte 15 und 16 sind um 180° zueinander versetzt.

In der Zone zwischen den Endpunkten 7 des Anliegens der flexiblen Elemente 2 und 3 an der Ausgangswelle 1 und den Verbindungsstellen der flexiblen Elemente 2 und 3 mit der Führungswelle 4 ist ein weiteres Spannmittel II für die flexiblen Elemente 2 und 3 angebracht. Bei der Ausführung in Fig. 1 weist das eine Spannmittel I der flexiblen Elemente 2 und 3 jeweils eine Feder 5 bzw. 6 auf. Das weitere Spannmittel II ist jeweils eine Feder 8, welche mit einem ihre Kraft verändernden Mechanismus 9 in Verbindung steht, der als ortsfestes Widerlager dient. Bei der Ausführung von Fig. 2 umfaßt das eine Spannmittel I ein lagefestes Element 10, das mit seinen beiden Enden mit den entsprechenden anderen Enden der flexiblen Elemente 2 bzw. 3 gelenkig verbunden ist. An der Mitte des lagefesten Elements 10 ist über einen Halter 12 eine Spannfeder 11 angelenkt. Das weitere Spannmittel II für die flexiblen Elemente 2 und 3 ist ein lagefestes Element 13, das mit seinen beiden Enden mit den flexiblen Elementen 2 bzw. 3 gelenkig verbunden ist. Das lagefeste Element 13 ist in seiner Mitte mit einer regulierenden ortsfesten Spannvorrichtung 14 gelenkig verbunden.

Das Impulsreibungsgetriebe arbeitet folgendermaßen:

Bei Drehung der Führungswelle 4 führen die einen Enden der daran angebrachten flexiblen Elemente 2 und 3 Kreisbewegungen aus, welche allmählich in hin- und hergehende Bewegung mit entgegengesetzten Richtungen übergehen. Wenn das erste flexible Element 2 bei seiner Bewegung das eine Spannmittel I spannt, übt es auf die Ausgangswelle 1 eine Anpreßkraft aus, so daß sich die Ausgangswelle 1 it dem ersten flexiblen Element 2 zu drehen beginnt. Inzwischen bewegt sich das zweite flexible Element 3 in entgegengesetzter Richtung, wobei es das eine Spannmittel I entspannt. Dadurch wird die Anpreßkraft des zweiten flexiblen Elements 3 auf die Ausgangswelle 1 verringert. Dadurch ist die Drehung der Ausgangswelle 1 in einer Richtung gesichert. Dasselbe wird erreicht, wenn die beiden flexiblen Elemente 2 und 3 ihre Bewegungsrichtungen ändern.

Beim Spannen des weiteren Spannmittels II, also der Federn 8 durch den Mechanismus 9 bzw. die ortsfeste, regulierende Spannvorrichtung 14 kommt es in der Zone zwischen der Führungswelle 4 und den Punkten 7 des Anliegens der flexiblen Elemente 2 und 3 an der Ausgangswelle 1 zu einem Durchhang der flexiblen Elemente 2 und 3. Damit die Führungswelle 4 eines der flexiblen Elemente 2 bzw. 3 in Drehung im Drehsinn der Ausgangswelle 1 versetzen kann, muß sie den Durchhang der flexiblen Elemente 2 und 3 aufheben. Wenn dieser Durchhang größer als der Gang der Führungswelle 4 ist, hört die Ausgangswelle 1 auf, sich zu drehen.

## Patentansprüche

1. Impulsreibungsgetriebe mit einer Führungskurbelwelle (4) und einer von einem ersten und einem zweiten flexiblen Element (2, 3) anliegend umfaßten Ausgangswelle (1), wobei die Führungskurbelwelle (4) einen ersten und einen zweiten zur Führungskurbelwelle (4) jeweils parallelen Kurbelzapfen (15, 16) aufweist, mit denen ein Ende des ersten flexiblen Elements (2) bzw. des zweiten flexiblen Elements (3) verbunden ist, während das andere Ende der beiden flexiblen Elemente (2, 3) mit einem Spannmittel (I) verbunden ist, dadurch gekennzeichnet, daß die Kurbelzapfen (15, 16) um 180° zueinander versetzt sind, daß im Bereich zwischen den Endpunkten (7) des Anliegens der beiden flexiblen Elemente (2, 3) an der Ausgangswelle (1) und den Verbindungsstellen der flexiblen Elemente (2, 3) mit der Führungskurbelwelle (4) ein weiteres Spannmittel (II) mit den beiden flexiblen Elementen (2, 3) verbunden ist, und daß sich beide Spannmittel (I, II) jeweils an einem ortsfesten Widerlager abstützen.

2. Impulsreibungsgetriebe nach Anspruch 1, dadurch gekennzeichnet, daß beide Spannmittel (I, II) Federn (5, 6, 8) sind und daß die Kraft der Federn (8) des weiteren Spannmittels (II) veränderbar ist.

3. Impulsreibungsgetriebe nach Anspruch 1, dadurch gekennzeichnet, daß das eine Spannmittel (I) ein lagefestes Element (10) ist, das mit seinen beiden Enden jeweils mit dem einen Ende der beiden flexiblen Elemente (2, 3) gelenkig verbunden ist, wobei an der Mitte des lagefesten Elements (10) eine Spannfeder (11) über einen Halter (12) angelenkt ist, und daß das weitere Spannmittel (II) ein weiteres lagefestes Element (13) aufweist, das mit seinen beiden Enden an den flexiblen Elementen (2, 3) angelenkt ist und das in seiner Mitte mit einer ortsfesten, regulierenden Spannvorrichtung (14) in Verbindung steht.

## Claims

1. Impulse friction drive having a guide crankshaft (4) and an output shaft (1), which is embraced by a first and a second flexible element (2, 3) butting against it, with the guide crankshaft (4) having a first and a second crank pin (15, 16), each of which is parallel to the guide crankshaft (4) and with which there is connected one end of the first flexible element (2) or of the second flexible element (3) respectively, whilst the other end of the two flexible elements (2, 3) is connected with a tensioning means (I), characterised in that the crank pins (15, 16) are offset in relation to each other by 180°, in that a further tensioning means (II) is connected with the two flexible elements (2, 3) in the region between the end points (7), at which the two flexible elements (2, 3) butt against the output shaft (1), and the points of connection of the flexible elements (2, 3) with the guide crankshaft (4), and in that both tensioning means (I, II) are braced respectively at a fixed abutment.

2. Impulse friction drive according to claim 1, characterised in that both tensioning means (I, II) are springs (5, 6, 8) and in that the force of the springs (8) of the further tensioning means (II) is variable.

3. Impulse friction drive according to claim 1, characterised in that one of the tensioning means (I) is a stable element (10), the two ends of which are connected in an articulated manner with the one respective end of the two flexible elements (2, 3), a tensioning spring (11) being articulated at the centre of the stable element (10), by way of a holder (12), and in that the further tensioning means (II) has a further stable element (13), both ends of which are articulated on the flexible elements (2, 3) and which communicates at its centre with a fixed, regulating tensioning arrangement (14).

## Revendications

1. Mécanisme de friction à impulsion comportant un vilebrequin d'entraînement (4) et un arbre de sortie (1) entouré d'une manière adhérente par des premier et second éléments flexible (2, 3), le vilebrequin d'entraînement (4) présentant des premier et second tourillons de vilebrequin (15, 16) respectivement parallèles au vilebrequin d'entraînement (4), auxquels est reliée l'une des extrémités du premier élément flexible (2), respectivement du second élément flexible (3), tandis que la seconde extrémité des deux éléments flexibles (2, 3) est reliée à un dispositif tendeur (I), caractérisé en ce que les tourillons de vilebrequin (15, 16) sont décalés de 180° l'un par rapport à l'autre, en ce que, dans la zone située entre les points terminaux (7) d'adhérence des deux éléments flexibles (2, 3) à l'arbre de sortie (1), et les points de jonction des éléments flexibles (2, 3) avec le vilebrequin d'entraînement (4), il est prévu un second dispositif tendeur (II) relié aux deux éléments flexibles (2, 3), et en ce que les deux dispositifs tendeurs (I, II) s'appuient respectivement contre une butée fixe.

2. Mécanisme de friction à impulsion selon la revendication 1, caractérisé en ce que les deux dispositifs tendeurs (I, II) sont des ressort (5, 6, 8) et en ce que la force des ressorts (8) du second dispositif tendeur (II) peut être modifiée.

3. Mécanisme de friction à impulsion selon la revendication 1, caractérisé en ce que l'un (I) des disporitifs tendeurs (I, II) est un élément fixe (10) dont les deux extrémités sont reliées respectivement à l'une des extrémités des deux éléments flexibles (2, deur (11) est articulé au niveau du milieu de l'élément fixe (10) par l'intermédiaire d'un élément porteur (12), et en ce que le second dispositif tendeur (II) présente un second élément fixe (13) dont les deux extrémités sont articulées sur les éléments flexibles (2, 3) et qui est en contact en son milieu avec un dispositif tendeur fixe de réglage (14).

Fig. 1

Fig. 2

EP 0 279 879 B1